(19) Europäisches Patentamt

European Patent Office

Office européen des brevets

(11) **EP 2 325 039 A2**

(12) **EUROPÄISCHE PATENTANMELDUNG**

(43) Veröffentlichungstag:
**25.05.2011 Patentblatt 2011/21**

(51) Int Cl.:
***B60L 15/00*** *(2006.01)*

(21) Anmeldenummer: **10012670.5**

(22) Anmeldetag: **01.10.2010**

(84) Benannte Vertragsstaaten:
**AL AT BE BG CH CY CZ DE DK EE ES FI FR GB
GR HR HU IE IS IT LI LT LU LV MC MK MT NL NO
PL PT RO RS SE SI SK SM TR**
Benannte Erstreckungsstaaten:
**BA ME**

(30) Priorität: **23.11.2009   DE 202009015916 U**

(71) Anmelder: **Noell Mobile Systems GmbH
97080 Würzburg (DE)**

(72) Erfinder: **Bauer, Reinhard
97280 Remlingen (DE)**

(74) Vertreter: **Hofmann, Matthias
Rau, Schneck & Hübner
Patentanwälte
Königstrasse 2
90402 Nürnberg (DE)**

(54) **Sensorsystem für Förderanlagen mit Linear-Synchron-Antrieb und Förderanlage**

(57)     Die Erfindung betrifft ein Sensorsystem für Förderanlagen mit Linear-Synchronmotor-Antrieb, wobei die Förderanlage aus einer Fahrbahn (3) mit Linearmotoren (4) besteht, auf der sich Förderwagen (1) bewegen, wobei an diesen Förderwagen (1) Magnetleisten (5) mit Permanentmagneten angebracht sind, deren Magnetpole immer abwechselnd Nord-Süd magnetisiert sind, wobei auf der Fahrbahn (3) Sensorblöcke (6) angebracht sind, deren Abstand kleiner ist, als die Länge der Magnetleiste (5), und an jedem Sensorblock (6) analoge Hallsensoren (7) angeordnet sind, deren analoge Signale der proportionalen Magnetfeldstärke entsprechen, wobei jeweils zwei Hallsensoren (7) zusammen gehören und einen Abstand zueinander aufweisen, der einer halben Polteilung der Magnetleisten (5) entspricht, wobei zwei zusammengehörige Hallsensoren (7) ein Sinus- und ein Cosinus-Signal abgeben, wenn der Wagen (1) mit seiner Magnetleiste (5) über den Hallsensoren (7) verfährt und eine Steuerung oder eine Regelung aus dem Sinus- und Cosinus-Signal der Hallsensoren (7) die Wagenposition, Wagengeschwindigkeit und Phasenlage der Magnete als Ist-Wert für die Antriebsregelung (13) errechnet und jeder Sensorblock (6) mit Hallsensor (7) und Analogeingabe-Baugruppe (8) zur Signalübertragung mit einem jeden anderen Sensorblock (6) mit Hallsensor (7) und Analogeingabe-Baugruppe über einen schnellen echtzeitfähigen Feldbus (9) und über eine Feldbusanschaltung (10) mit einem elektrischen Frequenzumrichter (12) und/oder mit einer Anlagensteuerung (17) verbunden ist, sowie eine Förderanlage.

Fig. 1

EP 2 325 039 A2

## Beschreibung

Die Erfindung betrifft ein Sensorsystem für Förderanlagen mit Linear-Synchron-Motoren-Antrieb entsprechend den Merkmalen des ersten Patentanspruchs und eine Förderanlage.

Die Erfindung überall dort anwendbar, wo Förderanlagen vorhanden sind, die mit Linearmotoren angetrieben werden.

Beispielhaft ist ein derartiges schienengebundenes Transportsystem für Container in DE103 53 455 A1 1 beschrieben. Bei solchen Anlagen fahren automatische Transportwagen über Fahrbahnen aus Schienen, die längs und quer angeordnet sind.

Diese rein passiven Rollwagen werden berührungslos durch elektromagnetische Linearantriebe bewegt und positioniert. Die Primärteile (Statoren) der Linear-Synchronmotorensind auf der Fahrbahn befestigt, die Sekundärteile (Magnetleisten mit Permanentmagneten) sind in Längs- und Querrichtung unter dem Unterwagen angebracht. Die Statoren erzeugen mit elektrischem Drehstrom magnetische Wanderfelder, so daß sich mit den Magneten unter den Transportwagen Schubkräfte ergeben, welche die Transportwagen in Längs- und Querrichtung berührungslos bewegen. Die Fahrgeschwindigkeit kann durch Verstellen der Stromfrequenz mit Frequenzumrichtern beliebig eingestellt werden.

Auf den Kreuzungspunkten von Längs- und Quergeleisen können die Wagen rechtwinklig abbiegen, indem ihre Räder ebenfalls von Linearantrieben von Längs- und Querrichtung geschwenkt werden.

Zur automatischen Steuerung der Wagen über regelbare Frequenzumrichter werden Sensoren benötigt für:

- ● Die aktuelle Position eines jeden einzelnen Wagens
- ● Die Wagengeschwindigkeit
- ● Die Phasenlage der Magnete für die Motorstromregelung
- ● Die Räderstellung in den Kreuzungspunkten (Längs oder Quer)
- ● Die Platzbelegung (Fahrbahnplatz frei oder belegt)
- ● Die Temperaturüberwachung der Statoren.

Bei Überfahrt des Wagens müssen die Sensoren vom jeweils gegenwärtig überdeckten Sensor zum nächsten überdeckten Sensor unterbrechungsfrei weiter geschaltet werden.

Sensorsysteme für Förderanlagen mit Linear-Synchronmotor-Antrieb sind verschiedene bekannt. Ein derartiges System ist in DE 197 33 547 C2 beschrieben. Dazu werden Sensorblöcke mit jeweils zwei analogen Magnetfeldsensoren (Hallsensoren) auf der Fahrbahn montiert, welche die Magnetfelder der darüber fahrenden Wagen detektieren. Die zwei Hallsensoren in einem Sensorblock haben einen Abstand zueinander, welcher der halben Magnetpolteilung der Magnetleisten entspricht. Die Signale der analogen Magnetfeldsensoren sind proportional zu den von den Sekundärteilen der Linearmotoren (Magnetleisten am Wagen) erzeugten Magnetfeldstärken. Wenn ein Wagen darüberfährt, gibt daher der eine Hallsensor ein Sinussignal und der andere ein Cosinussignal ab. Diese Signale werden mit Analogmultiplizierern elektronisch so aufbereitet, daß sie von handelsüblichen Frequenzumrichtern über deren Standard-Sensorschnittstellen (Resolverschnittstellen) eingelesen und verarbeitet werden können. Die Regler solcher Frequenzumrichter errechnen aus diesen Sensorsignalen dann die Wagenposition, die Wagengeschwindigkeit und den Kommutierungswinkel für die Phasenstromkommutierung der Linearmotoren. Zwischen Sensoren und Frequenzumrichtern ist eine elektronische Umschalteinrichtung (Analogmultiplexer) vorgesehen, welche vom jeweils belegten Sensor zum nächsten belegten Sensor weiter schaltet, wenn ein Wagen darüber fährt.

Bei diesem Sensorsystem ist die Verkabelung sehr aufwendig, da von jedem einzelnen Sensorblock je ein Signalkabel zum Analog-Multiplexer zu führen ist. Da auf jeder großen Anlage Hunderte von Sensorblöcken installiert werden müssen, sind die Materialmengen an Kabeln und Kabelkanälen sowie der Arbeitsaufwand bei der Montage ausgesprochen hoch. Komplexe Verdrahtungen von Systemen mit Analogsignalen sind außerdem störanfällig, wobei auftretende Störungen sehr schwierig zu finden sind.

DE 39 00 551 A1 1 offenbart eine automatische Guttransportvorrichtung mit lineargetriebenen Transportelementen. Dabei wird auf eine Busverbindung in Form einer Datensammelschiene hingewiesen, mit der einzelne dezentrale Motorsteuereinheiten mit einer zentralen Mikroprozessor-Steuereinheit verbunden sind. Dabei ist jede dezentrale Motorsteuereinheit jeweils einem Statorabschnitt vor Ort zugeordnet. Bei derartigen Vorrichtungen ist der Aufwand eben so groß mit dem Unterschied, daß die Sonden nicht zu einem Analog-Multiplexer, sondern zu einer digitalen Motorsteuereinheit verkabelt werden. Nicht offenbart in diesem Dokument ist, daß die einzelnen Sonden oder Sensoren mit dem Bus verbunden sind, sondern lediglich, daß diese mit der Motorsteuereinheit verdrahtet sind. Die hohe Anzahl solcher dezentraler Motorsteuereinheiten vor Ort ist als nachteilig anzusehen. Nicht offenbart ist die Art der Sonden und deren Anordnung in der Weise, nach welchem physikalischen Wirkprinzip die Sonden arbeiten und wie diese im Detail aufgebaut sind (z. B. Abstand der Sensoren zueinander usw.) Über die Motorsteuereinheiten ist auch nicht im Detail ausgesagt, wie diese aus einem Sondensignal Ist-Werte für die Frequenzumrichter errechnen und diese bei der Überfahrt weiterschalten.

Nachteilig an dem beschriebenen Stand der Technik ist der hohe Materialaufwand, der durch die Verkabelung insbesondere durch Kabelkanäle und Montagearbeiten entsteht, wobei Störungen häufig nur mit sehr erheblichem Aufwand ermittelbar sind und Diagnosemöglichkeiten gering sind. Die Signallaufzeit ist unnötig hoch.

Es ist daher Aufgabe der Erfindung, die bekannten Sensorsysteme und Förderanlagen nach dem Stand der Technik dahingehend weiter zu entwickeln, daß die Verkabelung einfach und übersichtlich gestaltet wird, der Verkabelungsaufwand deutlich geringer ist, wobei die Inbetriebnahme und Stördiagnose sich einfacher gestalten und möglichst viel an elektronischer Hardware wegfallen soll.

Diese Aufgabe wird durch ein Sensorsystem nach den Merkmalen des ersten Patentanspruches und eine Förderanlage nach Anspruch 9 gelöst.

Unteransprüche geben vorteilhafte Ausgestaltungen der Erfindung wieder.

Die erfindungsgemäße Lösung sieht ein Sensorsystem für Förderanlagen mit Linear-Synchronmotoren-Antrieb vor, welches aus einer Fahrbahn mit Linearmotoren, den Statoren und den sich darauf bewegenden Förderwagen besteht. An den Förderwagen sind Magnetleisten mit Permamentmagneten angebracht, wobei deren Magnetpole immer abwechselnd Nord-Süd-magnetisiert sind. Auf der Fahrbahn sind Sensorblöcke angebracht, wobei der Abstand der Sensorblöcke kleiner ist, als die Länge der Magnetleiste. In jedem Sensorblock befinden sich analoge Hallsensoren, deren analoge Signale proportional zur Magnetfeldstärke sind. Jeweils zwei Hallsensoren gehören zusammen und haben einen Abstand zueinander, der einer halben Polteilung der Magnetleisten entspricht. Jeweils zwei zusammengehörende Hallsensoren geben ein Sinus- und ein Cosinussignal ab, wenn sie von einem Wagen mit einer Magnetleiste überfahren werden. Eine Steuerung, beispielsweise eine SPS-Steuerung oder Regelung der Frequenzumrichter, errechnet aus dem Sinus- und Cosinussignal der Hallsensoren die Wagenposition, die Wagengeschwindigkeit und die Phasenlage der Magnete als Ist-Wert für die Antriebsregelung.

Erfindungsgemäß ist zwischen den Hallsensoren und den Frequenzumrichtern und/oder einer Steuerung ein Feldbussystem angeordnet. Bei dem Feldbussystem handelt es sich um ein schnelles, echtzeitfähiges Feldbussystem. Dieses überträgt die Signale der Hallsensoren zu den Frequenzumrichtern und/oder zu einer Steuerung. Unter Steuerung kann eine SPS-Steuerung oder ein Industrie-PC eingesetzt werden.

Zur Signalübertragung werden die analogen Signale der Hallsensoren vor Ort auf die Eingänge von Analogeingabe-Baugruppen geführt und von diesen digitalisiert und über das schnelle Feldbussystem übertragen. Die Auswertesoftware in der Steuerung, beispielsweise einer SPS-Steuerung, oder in der Frequenzumrichterregelung prüft alle digitalisierten Hallsondensignale auf Schwellwertüberschreitungen, wobei eine Schwellwertüberschreitung erkennbar macht, welcher Sensorblock gerade von einem Wagen überfahren wird, und schaltet dessen Signal softwaremäßig auf die Ist-Wert-Erfassung des digitalen Frequenzumrichter-Reglers.

Vorteilhaft ist es, daß die antriebsnahe Steuerung (SPS) über einen Parallelbus mit dem digitalen Rechner des Frequenzumrichters kommuniziert.

Weiterhin ist es vorteilhaft, die Thermosensoren der Linearmotoren über dezentrale Input/Output-Baugruppen an den gleichen Feldbus anzukoppeln.

Weiterhin ist es vorteilhaft, daß der schnelle echtzeitfähige Feldbus auf dem ETHERNET-Standard (IEEE-Norm 802.3) basiert.

Die erfindungsgemäße Lösung hat den Vorteil, daß der materielle und Montageaufwand für Kabel und Kabelkanäle einer Anlage eingespart werden kann, dezentrale Motorsteuereinheiten vor Ort werden nicht benötigt. Weiterhin arbeiten das schnelle Feldbussystem und die damit betriebene Anlage zuverlässiger als die nach dem Stand der Technik betriebenen Steuersysteme und —anlagen. Das Feldbussystem bietet einfachere Diagnosemöglichkeiten bei der Inbetriebnahme oder bei Störungen. Die echtzeitfähige schnelle Feldbuskommunikation zwischen Sensorik und antriebsnaher Steuerung sowie die Parallelbuskommunikation zwischen antriebsnaher Steuerung und Antriebsregler ermöglichen wegen der minimalen Signallaufzeiten eine synchronisierte, unterbrechungsfreie Weiterschaltung der Sensor-Ist-Werte, wenn der Wagen bei seiner Überfahrt den nächsten Sensorblock überdeckt und den bisherigen verläßt.

Im Folgenden soll die Erfindung an einem Ausführungsbeispiel und zwei Figuren erläutert werden. Die Figuren zeigen:

Figur 1: eine schematische Darstellung der Hardware und der Feldbuskonfiguration des erfundenen Sensorsystems

Figur 2: eine prinzipielle Funktionsplandarstellung der Auswertesoftware, welche auf der antriebsnahen SPS läuft

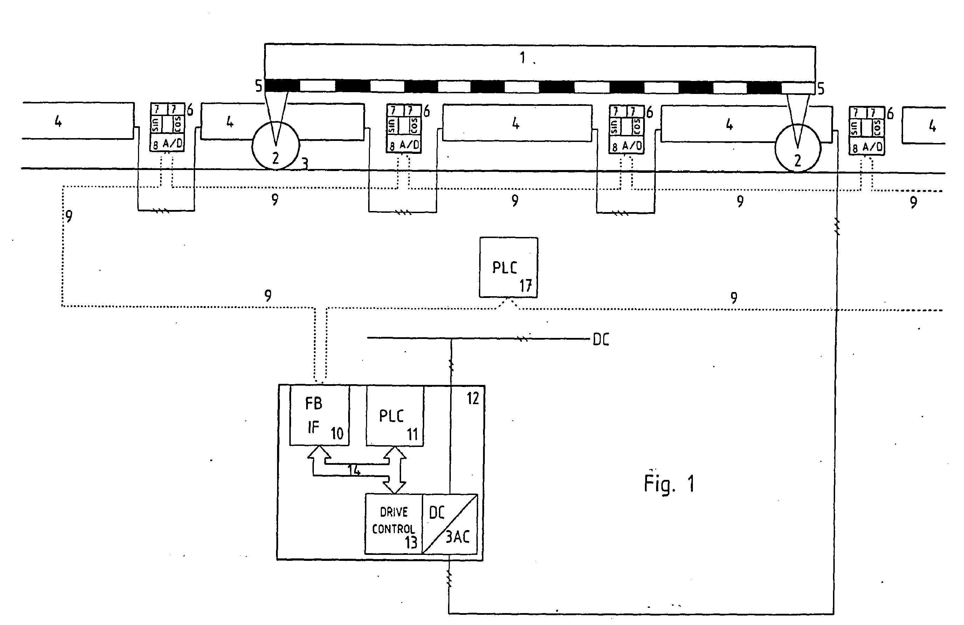

Die *Figur 1 zeigt* einen Förderwagen 1, der mit Rädern 2 auf einer Fahrbahn 3 aus Schienen rollt. Auf der Fahrbahn 3 sind Linearmotoren (Statoren) 4 angebracht. Unter dem Förderwagen 1 sind Magnetleisten 5 als Sekundärteile der Linearmotoren 4 angebracht. Die Magnetleisten 5 bestehen aus Permanentmagneten, deren Magnetpole immer abwechselnd Nord-Süd mit konstanter Polteilung magnetisiert sind. Bei Bestromung der Statoren 4 mit Drehstrom aus einem regelbaren elektronischen Frequenzumrichter 12 erzeugen diese Statoren 4 ein magnetisches Wanderfeld, welches zusammen mit der Magnetleiste 5 magnetische Schubkräfte zum berührungslosen Antrieb des Förderwagens 1 erzeugt.

Auf der Fahrbahn 3 ist außerdem eine Vielzahl von Sensorblöcken 6 angebracht. Deren Abstand zueinander ist kleiner als die Länge der Magnetleiste 5 des darüber fahrenden Förderwagens 1, so daß immer mindestens zwei Sensorblöcke 6 von der Magnetleiste 5 überdeckt sind. In jedem wetterfesten Sensorblockgehäuse 6 befinden sich zwei analoge Hallsensoren 7, deren Abstand zueinander einer halben Polteilung der Magnetleiste 5 entspricht, also z. B. 50 mm Abstand der beiden Hallsensoren 7 von einander bei 100 mm Polteilung der Permanentmagnete. Die Analogen Hallsensoren 7 geben je ein analoges Signal (z.B. eine elektrische Spannung) aus, welches proportional zur von den Hallsensoren 7 gemessenen Magnetfeldstärke der Magnetleiste 5 ist. Überfährt der Förderwagen 1 mit seiner Magnetleiste 5 einen Sensorblock 6, so gibt — wegen der abwechselnden Nord-Süd-Polarisierung der Permanentmagnete - der eine Hallsensor ein Sinussignal ab, und der andere ein Cosinus-Signal. Beide Signale sind zu den Eingängen einer Analogeingabebaugruppe 8 im Sensorblock 6 geführt, welche die die analogen Signale der Hallsensoren 7 digitalisiert und als Digitalsignale auf einen schnellen Feldbus 9 überträgt. Die Analogeingabebaugruppen 8 können auch sogenannte Analogeingabeklemmen sein, welche eine sehr kompakte Baugröße haben. Alle Sensorblöcke 6 eines Fahrbahnabschnittes sind über diesen schnellen Feldbus 9 untereinander und über eine Feldbusanschaltung 10 mit einer antriebsnahen speicherprogrammierbaren Steuerung (SPS) 11 verbunden, wobei die antriebsnahe SPS 11 mit der Feldbusanschaltung 10 zusammen im Gehäuse eines regelbaren elektronischen Frequenzumrichters 12 integriert ist und mit dem digitalen Antriebsregler 13 des Frequenzumrichters 12 über einen Parallelbus 14 kommuniziert.

Der schnelle Feldbus 9 muß die Signale der Sensorblöcke 6 quasi in Echtzeit an die antriebsnahe SPS 11 übertragen, da sie als Istwerte für den hochzyklisch laufenden digitalen Antriebsregler 13 gebraucht werden. Die Zykluszeit des digitalen Antriebsreglers 13 beträgt ca. 100 — 200 Mikrosekunden, damit die Ströme in den Linearmotoren regelungstechnisch beherrscht werden können. Es muß daher als schneller Feldbus 9 ein Bussystem gewählt werden, welches im Mikrosekundenbereich große I/O —Datenmengen übertragen kann. Ultra-Highspeed-Feldbusse, die auf Echtzeit-Ethernet-Technologien beruhen, wie z. B. EtherCAT (Ethernet for Control Automation Technology) können neuerdings solche Echtzeitaufgaben leisten, weil sie speziell für extrem kurze Zykluszeiten (< 100 Mikrosekunden) und exakte Synchronisierung entwickelt wurden.

Die antriebsnahe SPS 11 empfängt also die die digitalisierten Signale aller Hallsensoren 7 über den schnellen Feldbus 9, der Feldbusanschaltung 10 und dem Parallelbus 14.

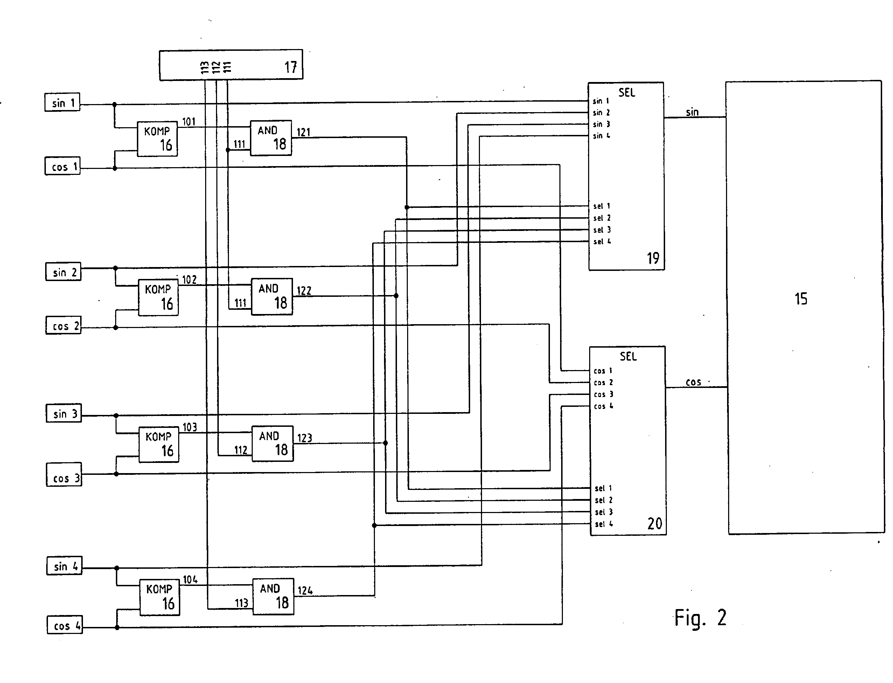

Die Signale der Hallsensoren 7 werden in der antriebsnahen SPS 11 durch eine Auswertesoftware, wie sie in Figur 2 als Funktionsplan dargestellt ist, ausgewertet und auf die Istwererfassung 15 des Antriebsreglers 13 geschaltet. Die Auswertesoftware übernimmt dabei die Funktionen eines Multiplexers.

Ein solcher Funktionsplan wie *Figur 2* kann z. B. mit der Programmiersprache IEC 61131 direkt in die SPS 11 implementiert werden. Jedoch stellt die Figur 2 nur eine mögliche beispielhafte Ausführung der Auswertesoftware als Prinzip dar. Bei der Implementierung muß dieses Prinzip u. U. im Detail noch präzisiert werden, was dem fachmännischen Programmierer jedoch problemlos möglich ist.

Die Sinus- und Cosinussignale von hier beispielhaft vier (in echten Anlagen jedoch eine Vielzahl) Sensorblöcken 6 liegen also in der antriebsnahen SPS 11 digitalisiert, z. B. als INTEGER-Variablen, vor. Jedes Signal wird nun von Grenzwertmeldern (Komparator-Funktionsblock) 16 auf Überschreitung eines Schwellwertes geprüft und damit ein binäres "Sensor belegt"- Signal 101,102,103,104 gebildet. Das jeweilige "Sensor belegt" —Signal 101, 102, 103,104 wird mit einem der Freigabesignal 111, 112, 113, aus der übergeordneten Anlagensteuerung (SPS) 17 in einem UND-Gatter 18 verknüpft und so ein "Sensor auswählen" — Signal 121,122,123,124 den Selektor-Funktionsblöcken 19 und 20 zugeführt.

Da in der gattungsgemäßen Förderanlage Fahrbahnschienen rechtwinklig in Längs- und Querrichtung angeordnet sind, und der Förderwagen 1 zum Abbiegen auf einem Kreuzungspunkt seine Räder (ebenfalls mit Linearmotoren) in Längs- oder Querrichtung schwenken kann, sind die Sensorblöcke 6 nach folgenden Gruppen zu unterscheiden:

● Sensorblöcke für die Längsfahrt (auf den Längsfahrbahnen montiert)
● Sensorblöcke für die Querfahrt (auf den Querfahrbahnen montiert)
● Sensorblöcke für die Schwenkantriebe der Räder (auf den Fahrbahnkreuzungen montiert)

Die übergeordnete Anlagensteuerung (SPS) 17 steuert den gesamten Wagenverkehr in einem Anlagenabschnitt und entscheidet unter anderem, wann und wo ein Wagen von der Längsfahrstrecke auf die Querfahrt abbiegen soll. Sie muß daher über die Freigabesignale 101, 102, 103 der antriebsnahen Steuerung 11 mitteilen, ob die Sensorblöcke für Längsfahrt, für Querfahrt oder zum Räderschwenken auf den Frequenzumrichter geschaltet werden sollen.

Die beiden Selektor-Funktionsblöcke 19 und 20 schalten entsprechend den binären "Sensor auswählen"-Signalen 121,122,123,124 das Sinus- bzw. Cosinus-Signal des ausgewählten Sensorblock auf ihren Ausgang durch. Wie solche Selektor-Funktionsblöcke im Detail zu programmieren sind, ist dem Fachmann bekannt. Er kann dafür z.B. den IEC-Operator SEL (Selektion) verwenden, welcher im Prinzip einen Software-Umschalter realisiert.

Von den Ausgängen der Selektor-Funktionsblöcke 19, 20 werden das Sinus- und Cosinus-Signal über den Parallelbus 14 an die Istwerterfassung 15 im Antriebsregler 13 übertragen.

In den meisten handelsüblichen Antriebsreglern ist eine Istwerterfassung, welche aus dem Sinus- und Cosinussignal eines Gebers den Pollagewinkel, den Positionsistwert und den Geschwindigkeitsistwert errechnet, als Standard in der Firmware des Antriebsreglers implementiert und braucht daher nur kurz erläutert zu werden:

$$\text{Pollagewinkel} = \arctan(\text{sinussignal} / \text{cosinussignal})$$

Geschwindigkeit = Differenzierung des Pollagewinkels nach der Zeit Anlagensteuerung (SPS) 17 in einem UND-Gatter 18 verknüpft und so ein "Sensor auswählen" - Signal 121, 122, 123, 124 den Selektor-Funktionsblöcken 19 und 20 zugeführt.

Der Pollagewinkel wird der feldorientierten Stromregelung als Istwert zugeführt, welche daraus den Kommutierungswinkel für die korrekte Phasenstromkommutierung der Linearmotoren bestimmt. Der Positionsistwert wird dem Positionsregler und der Geschwindigkeitsistwert dem Geschwindigkeits- oder Drehzahlregler zugeführt. Details hierzu findet der Fachmann in den Betriebshandbüchern für handelsübliche Frequenzumrichter.

**Liste der verwendeten Bezugszeichen**

1    Förderwagen (Containertransportwagen)

2    Rad

3    Fahrbahn mit Schienen

4    Linearmotor (Stator)

5    Magnetleiste

6    Sensorblock

7    Hallsensor (analog)

8    Analogeingabe-Baugruppe

9    Schneller Feldbus (echtzeitfähig)

10   Feldbusanschaltung

11   Speicherprogrammierbare Steuerung, antriebsnahe SPS

12   Frequenzumrichter (elektronisch regelbar)

13   Antriebsregler des Frequenzumrichters

14   Parallelbus

15   Istwerterfassung des Antriebsreglers

16   Grenzwertmelder (Komparator-Funktionsblock)

17   Übergeordnete Anlagensteuerung (SPS)

18   UND-Gatter

19   Selektor-Funktionsblock für Sinus-Signale

20    Selektor-Funktionsblock für Cosinus-Signale

Signale:

101    Sensorblock 1 ist belegt

102    Sensorblock 2 ist belegt

103    Sensorblock 3 ist belegt

104    Sensorblock 4 ist belegt

111    Freigabe Längsfahrtsensoren

112    Freigabe Querfahrtsensoren

113    Freigabe Sensoren der Räderschwenkantriebe

121    Anwahl Sensorblock 1

122    Anwahl Sensorblock 2

123    Anwahl sensorblock 3

124    Anwahl Sensorblock 4

**Patentansprüche**

1.  Sensorsystem für Förderanlagen mit Linear-Synchronmotor-Antrieb, wobei die Förderanlage aus einer Fahrbahn (3) mit Linearmotoren (4) besteht, auf der sich Förderwagen (1) bewegen, wobei an diesen Förderwagen (1) Magnetleisten (5) mit Permanentmagneten angebracht sind, deren Magnetpole immer abwechselnd Nord-Süd magnetisiert sind, wobei auf der Fahrbahn (3) Sensorblöcke (6) angebracht sind, deren Abstand kleiner ist, als die Länge der Magnetleiste (5), und an jedem Sensorblock (6) analoge Hallsensoren (7) angeordnet sind, deren analoge Signale der proportionalen Magnetfeldstärke entsprechen, wobei
    jeweils zwei Hallsensoren (7) zusammen gehören und einen Abstand zueinander aufweisen, der einer halben Polteilung der Magnetleisten (5) entspricht, wobei zwei zusammengehörige Hallsensoren (7) ein Sinus- und ein Cosinus-Signal abgeben, wenn der Wagen (1) mit seiner Magnetleiste (5) über den Hallsensoren (7) verfährt und eine Steuerung oder eine Regelung aus dem Sinus- und Cosinus-Signal der Hallsensoren (7) die Wagenposition, Wagengeschwindigkeit und Phasenlage der Magnete als Ist-Wert für die Antriebsregelung (13) errechnet,
    **dadurch gekennzeichnet, daß**
    jeder Sensorblock (6) mit Hallsensor (7) und Analogeingabe-Baugruppe (8) zur Signalübertragung mit einem jeden anderen Sensorblock (6) mit Hallsensor (7) und Analogeingabe-Baugruppe über einen schnellen echtzeitfähigen Feldbus (9) und über eine Feldbusanschaltung (10) mit einem elektrischen Frequenzumrichter (12) und/oder mit einer Anlagensteuerung (17) verbunden ist.

2.  Sensorsystem nach Anspruch 1, **dadurch gekennzeichnet, daß** die Anlagensteuerung (17) eine speicherprogrammierbare Steuerung (SPS) darstellt.

3.  Sensorsystem nach Anspruch 1, **dadurch gekennzeichnet, daß** der elektronische Frequenzumrichter (12) durch einen digitalen Antriebsregler (13) regelbar ist.

4.  Sensorsystem nach Anspruch 3, **dadurch gekennzeichnet, daß** die Feldbusanschaltung (10) mit einer antriebsnahen speicherprogrammierbaren Steuerung (SPS) (11) und dem regelbaren elektronischen Frequenzumrichter (12) verbunden und in einem Gehäuse angeordnet ist.

**5.** Sensorsystem nach den Ansprüchen 1 bis 4, **dadurch gekennzeichnet, daß** jeder Hallsensor (7) vor Ort mit dem Eingang einer Analogeingabe-Baugruppe (8) verbunden ist,
so daß die analogen Signale des Hallsensors (7) vor Ort auf den Eingang der Analogeingabe-Baugruppe (8) geführt und von dieser digitalisiert werden.

**6.** Sensorsystem nach den Ansprüchen 1 bis 5, **gekennzeichnet durch** eine Auswertesoftware in der antriebsnahen Steuerung (11) oder dem Frequenzumrichter (12), die geeignet ist, alle digitalisierten Hallsondensignale auf Schwellwertüberschreitung zu prüfen und bei Schwellwertüberschreitung den betreffenden Sensorblock (6) softwaremäßig auf die Ist-Wert-Erfassung des digitalen Frequenzumrichters (12) zu schalten.

**7.** Sensorsystem nach den Ansprüchen 1 bis 6, **dadurch gekennzeichnet, daß** zwischen der Feldbusanschaltung (10), der antriebsnahen Steuerung (11) und dem digitalen Regler (13) des Frequenzumrichters ein Parallelbus (14) angeordnet ist.

**8.** Sensorsystem nach den Ansprüchen 1 bis 7, **dadurch gekennzeichnet, daß** mindestens je ein Thermosensor der Linearmotoren (4) über dezentrale Input/Output-Baugruppen an den Feldbus (9) angekoppelt ist.

**9.** Förderanlage mit einem Sensorsystem nach den Merkmalen der Ansprüche 1 bis 8, **dadurch gekennzeichnet, daß** ein schnelles echtzeitfähiges Feldbussystem (9) zur Signalübertragung zwischen den Sensorblöcken (6) mit Hallsensoren (7) und Analogeingabe-Baugruppe (8), der Feldbusanschaltung (10) mit einem elektrischen Frequenzumrichter (12) und/oder der Anlagensteuerung (17) angeordnet ist.

Fig. 1

Fig. 2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10353455 A1
- DE 19733547 C2

- DE 3900551 A1